# FASCICULE DE BREVET EUROPEEN

(11) **EP 1 297 537 B1**
(45) Date de publication et mention de la délivrance du brevet: **29.09.2004**
(21) Numéro de dépôt: 01951857.0
(22) Date de dépôt: 27.07.2001
(51) Int. Cl.: H01B 1/12, C25D 5/56, D06M 15/356

(54) **STRUCTURES POREUSES COMPLEXES REVETUES DE PLOMB, ET PROCEDE D'ACTIVATION CONDUCTRICE CORRESPONDANT**
ELEKTRISCHE LEITENDE PORÖSE MIT BLEI ÜBERZOGENE KOMPLEXE- STRUKTUREN, UND VERFAHREN ZUM AKTIVIEREN
LEAD-COATED COMPLEX POROUS STRUCTURES, AND CORRESPONDING METHOD FOR CONDUCTIVE ACTIVATION

(30) Priorité: 01.08.2000 FR 0010107
(43) Date de publication de la demande: 02.04.2003
(73) Titulaire: S.C.P.S. S.A., 93110 Rosny-sous-Bois (FR)
(72) Inventeur: BUGNET, Bernard, F-94420 Le Plessis Trévise (FR); DONIAT, Denis, F-75116 Paris (FR)
(74) Mandataire: Moinas, Michel
(86) Numéro de dépôt international: PCT/IB2001/001357
(87) Numéro de publication internationale: WO 2002/011153

(56) Documents cités:
- EP-A- 0 761 710
- WO-A-99/48108
- US-A- 4 636 430
- US-A- 5 198 266

## Description

L'invention concerne le domaine de la fabrication de structures poreuses complexes métalliques ou métallisées.

L'invention est plus particulièrement relative au domaine de la fabrication de structures métalliques ou métallisées poreuses complexes pour application notamment à titre de collecteurs de charges et supports d'électrodes pour générateurs électrochimiques, d'isolants phoniques, ou autres.

Les structures selon l'invention sont destinées à être métallisées par voie électrolytique en plomb ou alliages à base de plomb.

Les structures métalliques ou métallisées selon l'invention sont de types mousse, feutre ou tissé à haut niveau de porosité ouverte, offrant l'aspect de réseaux denses de fibres ou mailles à ossature tridimensionnelle, définissant une pluralité d'espaces ouverts, en communication les uns avec les autres et avec l'extérieur des structures.

Les mousses sont des structures alvéolaires réticulées, de grande porosité (supérieure à 80%, et pouvant atteindre environ 98%), et à porosité ouverte par désoperculation, dans lesquelles les mailles du réseau communiquent entre elles en totalité,.ou pour le moins dans des proportions importantes.

Les feutres sont des enchevêtrements aléatoires de fibres non tissées (cependant pour l'essentiel d'entre elles positionnées sensiblement dans le plan de la « nappe » constituée), définissant entre elles des espaces inter-fibres de formes et dimensions variables, communicant entre eux. Leurs fibres peuvent être ou non collées par un agent liant.

Les tissés sont des structures constituées par assemblage de fils ou fibres textiles entrelacés, soit tissés soit maillés. Ils peuvent se présenter sous la forme de structures épaisses et complexes, notamment lorsqu'ils sont constitués de deux faces tissées externes reliées par tricotage de fils qui les maintiennent espacées et interconnectées à la fois, comme permettent par exemple de le réaliser les métiers à tisser de type Raschel.

Ces diverses structures poreuses complexes, que l'on destine selon l'invention à être métallisées à travers toute leur épaisseur, sur l'ensemble de leur surface développée, sans colmatage significatif de leur porosité, peuvent être approvisionnées en divers matériaux de base.

Pour les mousses, il s'agit de matières organiques, minérales ou synthétiques, et en particulier de polymères tels que du polyamide, du polyuréthanne (polyester ou polyéther), ou du polypropylène.

Pour les feutres et tissés, il s'agit également de matières organiques, minérales ou synthétiques, telles que les polymères précédemment cités, des fibres de verre, de roche ou de carbone, ou des fibres naturelles telles que coton, laine ou similaire.

Des structures selon l'invention, en plomb ou alliage à base de plomb, ou revêtues de plomb ou d'un tel alliage, présentent un intérêt pour diverses applications, et en particulier celles de support-collecteur de charges d'électrodes pour accumulateurs au plomb (PbPbO₂) à électrolyte acide.

L'accumulateur au plomb constitue un générateur électrochimique secondaire présentant de grandes qualités, et notamment son faible coût et sa relative simplicité de fabrication, mais il est handicapé par d'assez faibles niveaux de performances techniques, en particulier en termes d'énergie massique, de capacité à répondre à de forts appels de puissance, et de durée de vie.

Une amélioration, tant de l'énergie massique que de l'aptitude à répondre dans les meilleures conditions aux forts appels de puissance, peut être avantageusement recherchée à travers la mise en oeuvre de supports-collecteurs d'électrodes qui soient allégés par rapport aux grilles de plomb classiquement utilisées, tout en constituant un réseau conducteur dense au sein des matières actives.

Les mousses de plomb ou alliages de plomb - ainsi que les tissés et dans une moindre mesure les feutres - peuvent constituer une réponse adaptée à cet objectif, en particulier pour la réalisation de l'anode, pour laquelle les contraintes en matière de corrosion sont beaucoup moins sévères que celles affectant la cathode. La prise en compte des phénomènes de corrosion ne saurait en pareil cas être négligée, du fait de la finesse des mailles ou fibres métalliques dans une structure selon l'invention.

Pour métalliser de telles structures par voie électrolytique (par galvanoplastie), il convient préalablement de sensibiliser, c'est à dire ici de rendre électriquement conducteur le matériau de base utilisé. C'est l'étape souvent appelée "activation conductrice" du substrat de départ. Diverses procédures d'activation conductrice ont déjà été proposées, parmi lesquelles :
- dépôt chimique de métal, suivi du ou des dépôts électrochimiques,
- dépôt de particules conductrices de carbone ou graphite, cuivre, argent, par exemple, notamment sous forme de laque ou peinture conductrice, suivi du ou des dépôts électrochimiques,
- dépôt métallique sous vide, notamment par pulvérisation cathodique, diffusion gazeuse ou dépôt ionique, suivi du ou des dépôts électrochimiques,
- dépôt chimique de polymère conducteur, suivi du ou des dépôts électrochimiques de métal.

Si le dépôt chimique de plomb n'est pas réalisable, une activation conduite par dépôt sous vide du même métal peut permettre de réaliser ensuite un dépôt électrochimique de plomb ou d'alliages de plomb. Il s'agirait cependant là d'une étape d'activation coûteuse et, de par ce caractère, d'une technique inappropriée pour application à des produits qui doivent être de coût compatible avec l'application, donc faible.

Une activation par dépôt d'autre métal (cuivre, argent,...) présenterait, outre un même problème de coût, des difficultés liées à l'utilisation en accumulateur PbPbO₂, en termes de compatibilité avec l'électrolyte acide du générateur.

Quant aux procédés de dépôts de carbone ou de polymère conducteur, ils s'avèrent, chacun pour des raisons différentes, inaptes à permettre le dépôt ultérieur de plomb ou d'alliages de plomb.

Le dépôt galvanique de plomb (ou d'alliages de plomb), sur mousse préalablement revêtue de laque renfermant des particules de carbone ou graphite, apparaît quasiment irréalisable, du fait du faible niveau de conductivité électrique obtenu par ce procédé : on mesure, après une telle activation conductrice de la structure, pour environ 50 à 90 g de laque par m² de surface apparente d'une mousse en épaisseur 1,5 à 2,0 mm, une résistivité de surface de l'ordre de 500 Ω.carré. La conductivité atteinte est donc médiocre; elle est de surcroît souvent non homogène.

On rappellera que la mesure de résistivité de surface de telles structures poreuses complexes, après activation conductrice, s'effectue à l'aide d'un ohm-mètre relié à deux plots conducteurs de surfaces carrées de côté "a", posés sur la structure, et positionnés de telle sorte que leurs côtés en vis à vis soient eux-mêmes distants d'une longueur elle aussi égale à "a". La valeur de résistivité mesurée, exprimée en "Ω.carré", est indépendante de la valeur adoptée pour "a"; il est cependant fréquent de retenir "a" = 1 centimètre.

A partir d'une structure activée par dépôt de polymère conducteur, et en particulier de polypyrrole, selon le procédé décrit dans l'exposé d'invention FR 98 03375, brevet français du 19 mars 1998, il s'avère très difficile d'effectuer le dépôt de plomb (ou alliages) dans des conditions économiquement et industriellement viables, et ce malgré le haut niveau de conductivité dont on peut disposer, puisque l'activation conductrice par dépôt de polypyrrole permet aisément d'obtenir des résistivités de surface de 15 à 30 Ω.carré (pour environ 5 à 10 g de polymère conducteur par mètre-carré de surface apparente d'une mousse en épaisseur 1,5 à 2,0 mm).

Cette difficulté tient au fait que le dépôt électrolytique de plomb est pratiqué à partir de solutions acides constituées à base de fluoborate ou de sulfamate de plomb (acides sulfamique et/ou fluoborique), et qui, en cours d'électrolyse, provoquent une désactivation, au moins partielle, de la couche de polymère conducteur. Cette désactivation (ou dédopage) correspond à une réaction électrochimique de désinsertion des ions dopants du polypyrrole, lesquels lui confèrent sa propriété de conduction électrique. Il résulte donc de cette désinsertion une réduction de la conductivité du polymère.

Ce phénomène, provoqué par la polarisation cathodique de la structure à métalliser, dans le bain d'électrolyse, affecte bien évidemment la conduite de l'opération de galvanoplastie. Lors de toute étape d'électrolyse sur structure activée par dépôt de polymère conducteur, ladite structure, cathodiquement polarisée, est soumise à une compétition s'opérant entre les réactions de dépôt de métal et de désinsertion des ions dopants. Dans le cas du dépôt de plomb, c'est la désactivation du polymère conducteur qui s'effectue de manière prépondérante, contrairement à ce que l'on observe par exemple en bains de cuivrage ou de nickelage électrochimiques.

Ainsi, malgré l'excellente qualité de cette activation, le dépôt de plomb connaît des difficultés à s'amorcer, et ne se propage ensuite, dans le meilleur des cas, que très lentement, et généralement sous forme d'arborescences et non de dépôt homogène.

Il était a priori possible de tenter de résoudre le problème ainsi posé, en mettant en oeuvre une autre approche de la question du dépôt de plomb sur la structure poreuse : celle-ci pouvait être de renoncer à l'électrolyse pour adopter un autre procédé de déposition qui permette d'éviter l'étape d'activation conductrice.

Le dépôt chimique de plomb, on l'a dit, est impossible à réaliser. Les dépôts sous vide, surtout pour des densités de déposition élevées, s'avèrent très coûteux. Quant à la technique de choopage, elle peut en principe être utilisée pour la pulvérisation de plomb à l'état fondu. Il est en pratique préférable d'y renoncer pour des raisons de sécurité, tant vis à vis des opérateurs que de l'environnement en général.

L'objet de la présente invention est d'apporter une réponse originale à la définition d'un procédé nouveau d'activation conductrice apte à permettre le dépôt électrolytique de plomb dans des conditions techniquement et économiquement satisfaisantes.

Dans le cadre de la présente invention, la recherche nécessaire d'un procédé d'activation qui associe d'une part un niveau de coût réduit et d'autre part un haut degré de conductivité électrique de la structure avant métallisation galvanique, a conduit à privilégier le dépôt de polymère conducteur, tel que décrit dans le brevet français FR 98 03375 (numéro de publication 2 776 211). Il convenait cependant de pouvoir compléter cette étape par une opération qui permette, sans réduire la conductivité de la structure à métalliser, de protéger la couche d'activation contre l'attaque électrochimique provoquée par la polarisation, en cathode de la cuve d'électrolyse, de ladite structure.

Divers modes de protection électrochimique du polymère conducteur peuvent être envisagés. Le choix effectué dans le cadre de la présente invention a notamment reposé sur des critères de nature économique - nécessité de stricte limitation des coûts - et de nature technique - simplicité opératoire, mise en oeuvre de techniques industrielles disponibles. Ces considérations ont ainsi, par exemple, conduit à renoncer à élaborer des polymères composites qui seraient susceptibles d'inclure une fonction d'autoprotection contre l'action de désactivation de l'électrolyse de plomb.

Selon la présente invention, on procède, sur la couche de polymère conducteur, à la réalisation d'un dépôt complémentaire protecteur, lequel est constitué par une couche mince de laque ou vernis conducteur.

Cette laque protectrice est obtenue par mélange d'au moins un agent plastifiant, un agent conducteur, et un solvant.

La définition de la laque protectrice de la couche de polymère conducteur doit être effectuée en respectant un certain nombre de critères sélectifs.

Cette laque, en premier lieu, ne doit pas risquer de provoquer une dégradation nuisible de la couche de polymère conducteur et de ses propriétés. En particulier, le ou les solvants utilisés pour la préparation de la laque doivent être choisis de manière à ne pas induire une telle altération, avant que ne soit achevée leur évaporation.

La laque doit ensuite s'avérer apte à résister chimiquement dans le bain d'électrolyse de plomb, pour le moins jusqu'à ce que soit opéré le recouvrement de la structure par le métal ou alliage électrodéposé.

La même laque doit encore être, de par sa nature, chimiquement stable et électrochimiquement neutre dans l'électrode d'accumulateur au sein de laquelle la structure sera utilisée comme support-collecteur de charges, ou pour le moins ne pas y provoquer d'effets indésirables. Elle doit donc notamment ne pas risquer de former un couple électrochimique avec la matière active de ladite électrode, et ne pas réagir de manière significativement négative dans le milieu électrolytique de l'accumulateur. Ce critère conduit ainsi, par exemple, à ne pas retenir - pour l'application à l'accumulateur PbPbO₂ - une laque au cuivre, dont l'élément conducteur serait corrodé par l'électrolyte acide de l'accumulateur.

Pour respecter les contraintes économiques liées à la même application principale, il importe de mettre en oeuvre une laque qui soit également de faible coût. Les laques à l'argent sont de ce point de vue difficilement envisageables, d'autant plus qu'elles présentent également un risque de corrosion, en particulier si l'on envisage d'utiliser la structure comme support-collecteur non seulement en anode (électrode négative) mais aussi en cathode (électrode positive) de l'accumulateur au plomb.

Pour ces diverses raisons, on privilégie dans le cadre de la présente invention les laques ou vernis chargés en carbone ou graphite, et ce malgré leur niveau médiocre de conductivité électrique. Il est par contre important, dans le cadre de la présente invention, que la couche de laque soit mince, comme on va le comprendre dans ce qui suit.

Il est essentiel, pour pouvoir réaliser l'électrodéposition du plomb, de disposer d'un haut niveau de conductivité pour la structure activée. Celui conféré par l'activation conductrice au polymère conducteur est de ce point de vue pleinement satisfaisant. La nécessité de revêtir le polymère conducteur pour le protéger lors de l'électrolyse, ne doit donc pas conduire à une réduction de la conductivité de la structure, laquelle - on l'a vu - s'apprécie à travers la valeur de la résistivité de surface.

Dans ces conditions, la couche de laque protectrice ne doit pas accroître de manière sensible le niveau de résistivité de surface que l'on peut mesurer. La laque ne doit donc pas être électriquement isolante. Une laque au carbone ou graphite, médiocrement conductrice, ne doit être appliquée qu'en couche mince, si l'on veut pouvoir continuer à mesurer sans altération notable la faible valeur de résistivité de surface qui est propre au dépôt sous-jacent de polymère conducteur. Plus l'épaisseur de la couche de laque augmente, plus la mesure de résistivité de surface que l'on peut effectuer se rapproche de celle qui est propre à la laque, et moins aisée sera alors l'électrolyse de plomb, jusqu'à devenir irréalisable.

Il est donc clair que la couche de laque conductrice ne saurait être conçue comme une seconde activation conductrice ajoutée sur la première (polymère conducteur), qui serait alors réalisée en couche épaisse (densité de l'ordre d'au moins 50 g de laque par m² de surface apparente), mais bien comme une couche protectrice du polymère conducteur, devant dans ce cas être mince pour ne pas réduire de manière significative les propriétés électriques conférées par l'activation à proprement parler, c'est à dire par le dépôt de polymère conducteur.

Il est possible, dans le cadre de la présente invention, de réaliser le dépôt d'une telle couche mince de laque au carbone ou au graphite selon diverses méthodes, et notamment par brossage (pour les structures les plus ouvertes), par immersion des structures dans un bain de laque, ou par pulvérisation de ladite laque au travers des structures.

Le recouvrement par la laque protectrice de l'ensemble de la surface développée de la structure activée par dépôt de polymère conducteur, doit être le plus complet possible pour que la protection recherchée soit la plus efficace, et que l'électrolyse de plomb s'effectue dans les meilleures conditions.

Une structure poreuse selon l'invention (mousse, feutre ou tissé) devient donc apte, après activation conductrice réalisée en accord avec le procédé décrit dans le document FR 98 03375 sus-mentionné, puis mise en place d'une couche protectrice fine de laque au carbone ou graphite, à recevoir un dépôt électrolytique de plomb ou d'alliage à base de plomb.

Une structure poreuse selon l'invention, traitée pour devenir apte à recevoir un dépôt cohérent de plomb ou d'alliage de plomb par traitement électrolytique, subit donc deux opérations successives de préparation :
une activation conductrice à proprement parler, par dépôt de polymère conducteur, par exemple selon le procédé chimique décrit par le brevet français FR 98 03375; un traitement de protection superficielle de la couche d'activation conductrice, par dépôt mince couvrant d'une laque conductrice.

On rappellera ici que le procédé de formation du polymère conducteur sur l'ensemble de la surface des fibres ou mailles de la structure à activer, tel que décrit par le brevet FR 98 03375, comprend lui-même les étapes suivantes :
a) pré-traitement oxydant de la structure de base,
b) rinçage, éventuellement complété par égouttage et séchage,
c) dépôt d'un monomère,
d) égouttage,
e) polymérisation du monomère, par oxydation-dopage, en un polymère électriquement conducteur,
f) rinçage, et égouttage,
g) séchage éventuel.

Bien que la laque protectrice soit elle-même électriquement conductrice, la fonction d'activation est conférée à la structure par le dépôt initial de polymère conducteur. Le caractère conducteur de la laque superficielle a pour objet de ne pas accroître de manière gênante la résistivité de surface de l'ensemble, et non pas de compléter la fonction d'activation conductrice du polymère conducteur par une amélioration de la conductivité.

L'activation conductrice selon l'invention, dont la raison d'être est de rendre la structure poreuse apte à recevoir un dépôt galvanique de plomb ou d'alliage de plomb, doit cependant être considérée comme étant constituée, à cet effet, de deux phases principales et successives : dépôt de polymère conducteur, puis dépôt d'une couche mince protectrice de laque conductrice.

A titre d'exemple non limitatif de l'invention, et pour l'illustrer et l'expliciter davantage, on décrira ci-après la réalisation, selon un mode préférentiel de mise en oeuvre de l'invention, d'un traitement global d'activation conductrice par dépôt de polymère conducteur, puis dépôt d'une fine couche de laque conductrice.

La structure que l'on souhaite activer en vue d'un dépôt électrolytique de plomb, est une mousse de polyuréthane de qualité dite « ppI 80 » (grade correspondant à 80 pores par inch linéaire, soit environ 3000 pores/mètre linéaire), désoperculée (réticulée, donc à porosité essentiellement ouverte), dont la densité est de l'ordre de 30 kg/m³, et la surface développée d'environ 6.500 m²/m³.

Le dépôt de polymère conducteur est effectué selon le procédé décrit par le brevet français sus-mentionné FR 98 03375. C'est du polypyrrole qui est formé sur l'ensemble de la surface développée de la mousse de polyuréthanne, sans colmatage de la porosité interne. Après ce traitement effectué sur bloc de mousse, celui-ci est pelé afin d'obtenir un rouleau d'une feuille de mousse en épaisseur de 2 mm.

Sur une telle feuille, la quantité fixée de polypyrrole est d'environ 0,008 kg/m² de surface apparente. On peut aisément la faire varier de manière utile, selon les performances recherchées, entre environ 5 et 12 g/m² de surface apparente.

On peut également être amené à faire varier ces quantités en fonction de la nature chimique du matériau de base constitutif du substrat poreux avant activation, et du rapport existant entre surface développée et surface apparente.

Il est bien sûr possible de mettre en oeuvre des structures poreuses selon l'invention, qui soient non pas de type mousse réticulée, mais de types tissé ou non tissé.

Dans l'exemple cité, la résistivité de surface recherchée, pour la définition des conditions de traitement d'activation, avait été fixée à environ 20 Ω.carré, et les mesures effectuées conduisaient, selon les zones, à des valeurs situées entre 18 et 21 Ω.carré. On peut, dans le cadre de la présente invention, et à travers les paramètres du traitement, choisir de faire varier les niveaux de résistivité en fonction des performances recherchées, entre environ 10 et 60 Ω.carré.

On procède ensuite au revêtement du polypyrrole par dépôt d'une fine couche protectrice de laque conductrice.

La composition utilisée dans cet exemple pour la laque, est la suivante :
- 10 g de polystyrène
- 90 g de méthyléthylcétone
- 15 g de poudre de noirs de carbone de dimension de grain voisine de 1 µm.

Il est également possible de réaliser la laque avec des poudres de graphite, mais dont les dimensions de grains seront en général supérieures, de l'ordre le plus souvent de 2 à 3 µm, ce qui peut conduire à un état de surface moins régulier.

L'agent conducteur de la laque peut y être présent sous des formes diverses : poudres sphériques ou non, filaments, formes lenticulaires, etc. Les poudres fines sont préférentiellement retenues, comme étant d'une manière générale plus aptes à permettre l'obtention d'un dépôt mince sur les fibres ou mailles de la structure, et à limiter les risques de colmatage de ladite structure.

On peut également utiliser d'autres plastifiants, tels que le polychlorure de vinyle, des résines phénoliques, des caoutchoucs synthétiques, ou encore d'autres solvants, tels que par exemple des alcools, des cétones ou des éthers. Le produit commercialisé sous le nom Vemiphite BP112 par la société Nippon Graphite Industry, peut remplir la fonction de laque protectrice conductrice selon la présente invention, c'est à dire en utilisation en couche mince.

Dans l'exemple cité, la laque est pulvérisée au sein de la structure, à travers ses deux faces, de manière à obtenir un dépôt fin, continu, qui recouvre l'ensemble de la surface développée de la mousse sans colmater ses pores. Le solvant est ensuite évaporé, soit de manière naturelle, soit par soufflage d'air, soit encore par léger chauffage.

Une couche mince de laque peut également être obtenue par immersion de la feuille de mousse revêtue de polypyrrole dans la laque au carbone. Ce trempage est avantageusement suivi d'un soufflage d'air à travers la mousse, destiné à retirer l'excès de laque qui conduirait à un dépôt trop épais sur les mailles de la structure, ou même à un colmatage de ses pores.

Contrairement à la nécessité qui s'impose lorsque la couche de laque au carbone constitue par elle-même le mode d'activation conductrice, il n'est pas nécessaire ici de faire suivre son dépôt par un traitement thermique destiné à la carboniser et à accroître ainsi la continuité de sa conductivité.

Le dépôt de la couche de laque protectrice sur la feuille de mousse correspond, selon l'exemple, à une masse appliquée de 0,008 kg/m² de surface apparente. On peut faire varier cette masse, dans le cadre de la présente invention, entre environ 4 et 25 g/m² de surface apparente (soit environ 0,3 à 2 g/m² de surface développée ou réelle), sans accroître de manière significative la résistivité de surface de la mousse. On rappellera ici que lorsque la couche de laque au carbone constitue par elle-même le mode d'activation conductrice (et non une simple protection), la masse déposée doit généralement être de l'ordre de 50 à 80 g/m² de surface apparente, pour des épaisseurs de feuille de mousse de 1,5 à 2 mm. (soit d'environ 4 à 6 g/m² de surface développée ou réelle).

Après dépôt de la laque protectrice, les mesures faites de la résistivité de surface de la structure fournissent des valeurs situées entre 18 et 25 Ω.carré. On observe, d'une manière générale, que l'évolution de la résistivité varie, du fait de la mise en place de la laque protectrice, de 0 à 5 Ω.carré par rapport à ce qu'elle était avant dépôt de la laque. Pour l'obtention, dans des conditions satisfaisantes, d'un dépôt électrolytique de plomb ou d'alliage de plomb, il convient que la résistivité de la structure activée selon la présente invention, c'est à dire après revêtements successifs de polymère conducteur puis de laque conductrice de protection, ne dépasse pas environ 60 Ω.carré.

Sur une structure poreuse activée en accord avec la présente invention, le dépôt électrolytique de plomb, notamment à partir d'un bain de type "fluoborate", s'amorce sans difficulté, et se propage de manière homogène à partir de tout le front d'amorçage, à des vitesses qui rendent le procédé - et les produits qui en résultent - viables industriellement et économiquement. Il est alors possible de déposer, sur l'ensemble de la surface développée de quelques centaines de grammes à quelques kilogrammes de plomb par m² de surface apparente de structure.

Il est également possible de réaliser des dépôts électrochimiques d'alliages à base de plomb, tels que par exemple des alliages plomb-étain ou plomb-antimoine, qui présentent des caractéristiques mécaniques et/ou de résistance à la corrosion supérieures à celle du plomb non allié.

La structure ainsi métallisée pourra ou non subir un traitement thermique destiné à éliminer les matières organiques (matériau de base du substrat, polymère conducteur, plastifiant de la laque, poudre de noirs de carbone
ou graphite), pour ne conserver que le métal ou alliage électrochimique. Les faibles niveaux de point de fusion du plomb et de ses alliages, de même que leur malléabilité, peuvent cependant inciter à conserver le réseau interne organique, lorsqu'il ne s'avère pas incompatible avec l'utilisation visée.

Naturellement, et comme il résulte d'ailleurs largement de ce qui précède, l'invention n'est pas limitée aux modes de réalisation particuliers qui ont été décrits à titre d'exemples. L'invention ne se limite pas aux exemples qui ont été donnés, mais en embrasse toutes les variantes.

## Revendications

1. Procédé de traitement de structures poreuses complexes de types mousse réticulée, feutre ou tissé, destiné à les rendre électriquement conductrices en vue de la réalisation sur l'ensemble de leur surface développée d'un dépôt électrochimique de plomb ou alliage de plomb, **caractérisé en ce qu'**il s'effectue en deux phases de revêtement successives, à savoir
a) un traitement de formation de polymère conducteur, conférant la conductivité électrique continue recherchée,
b) un traitement de protection superficielle de la couche de polymère conducteur, par dépôt d'une couche de laque ou vernis conducteur suffisamment mince pour assurer la protection superficielle du polymère conducteur sans réduire la conductivité électrique conférée aux structures par l'étape a) ; la laque ou vernis conducteur étant constituée d'au moins un agent plastifiant, un solvant et un agent électriquement conducteur constitué par du carbone ou du graphite,
ces deux dépôts étant eux-mêmes effectués à travers l'épaisseur des structures, en surface de leurs fibres ou mailles, sans colmater leur porosité.

2. Procédé selon la revendication 1, **caractérisé en ce que** le dépôt initial de polymère conducteur est obtenu au terme d'un traitement qui comprend lui-même les étapes suivantes :
a) pré-traitement oxydant de la structure de base,
b) rinçage, éventuellement complété par égouttage et séchage,
c) dépôt d'un monomère,
d) égouttage,
e) polymérisation du monomère, par oxydation-dopage, en un polymère électriquement conducteur,
f) rinçage, et égouttage,
g) séchage éventuel, ces diverses étapes étant réalisées les unes après les autres à travers le volume de la structure à traiter, et de manière à conduire à la formation du polymère conducteur sur l'ensemble de la surface développée des structures, sans colmater leur porosité interne.

3. Procédé selon l'une quelconque des revendications 1 ou 2, **caractérisé en ce que** le polymère conducteur de son dépôt initial est du polypyrrole.

4. Procédé selon les revendications 1 et 3, **caractérisé en ce que** l'agent conducteur du vernis ou laque se présente sous l'aspect de poudres, de filaments ou de formes lenticulaires.

5. Procédé selon les revendications 1 et 4, **caractérisé en ce que** le dépôt de la couche de vernis ou laque protecteur est effectué par brossage, par trempage ou par pulvérisation.

6. Structures poreuses complexes de types mousse réticulée, feutre ou tissé, **caractérisées en ce que** leur métallisation, sur l'ensemble de leur surface développée, par électrolyse de plomb ou d'alliages de plomb, est rendue possible par un traitement préalable spécifique d'activation conductrice obtenu à travers deux phases successives de revêtement de la surface développée des structures, consistant en un premier dépôt de polymère conducteur, lequel confère la conductivité requise aux structures, et en un second dépôt de laque ou vernis conducteur chargé en carbone ou graphite et suffisamment mince pour assurer la protection superficielle du polymère conducteur sans réduire la conductivité électrique conférée aux structures, contre l'action de désactivation du caractère conducteur de ce dernier, due à la polarisation cathodique desdites structures dans le bain de plombage électrolytique.

7. Structures poreuses complexes de types mousse réticulée, feutre ou tissé selon la revendication 6, **caractérisées en ce que** le polymère conducteur formé à la surface du substrat initial est du polypyrrole.

8. Structures poreuses complexes de types mousse réticulée, feutre ou tissé selon la revendication 6, **caractérisées en ce que** l'agent conducteur du vernis protecteur du polymère conducteur, se présente sous l'aspect de poudres, de filaments ou de formes lenticulaires.

9. Structures poreuses complexes de types mousse réticulée, feutre ou tissé selon les revendications 6 et 8, **caractérisées en ce que** le dépôt de laque protectrice conductrice est compris entre 0,3 et 2 g/m² de surface développée.

## Patentansprüche

1. Verfahren zum Behandeln komplexer poröser Strukturen nach Art eines vernetzten, verfilzten oder gewebten schaumartigen Materiales, das dazu bestimmt ist, diese durch eine elektrochemische Ablagerung von Blei oder einer Bleilegierung auf der Gesamtheit ihrer ausgebildeten Oberfläche elektrisch leitfähig zu machen, **dadurch gekennzeichnet, dass** es in zwei aufeinanderfolgenden Beschichtungsphasen durchgeführt wird, nämlich
a) einem Behandeln zum Ausbilden eines Polymerleiters, der die gewünschte gleichmäßige elektrische Leitfähigkeit schafft,
b) einem Behandeln zum Oberflächenschutz der Polymerleiterschicht durch Ablagern einer ausreichend dünnen Lack- oder Glasurschicht zum Sicherstellen des Oberflächenschutzes des Polymerleiters ohne Verringern der den Strukturen bei dem Schritt a) verliehenen elektrischen Leitfähigkeit, wobei der Lackoder Glasurleiter aus wenigstens einem weichmachenden Mittel, einem Lösungsmittel und einem durch Kohlenstoff oder Grafit gebildeten elektrischen Leitermittel gebildet ist,
wobei die beiden Ablagerungen über die Dicke der Strukturen auf der Oberfläche ihrer Fasern oder Maschen ohne Beeinträchtigen ihrer Porosität durchgeführt werden.

2. Verfahren nach Anspruch 1, **dadurch gekennzeichnet, dass** die Anfangsablagerung des Polymerleiters in Verbindung mit einer Behandlung erfolgt, die selbst die folgenden Schritte aufweist:
a) oxidierende Vorbehandlung der Grundstruktur,
b) Spülen, gegebenenfalls abgeschlossen mit Entwässern sowie Trocknen,
c) Ablagern eines Monomers,
d) Entwässern,
e) Polymerisation des Monomers durch Oxidation-Dotieren in ein elektrisch leitendes Polymer,
f) Spülen und Entwässern,
g) gegebenenfalls Trocknen,
wobei die verschiedenen Schritte nacheinander über das gesamte Volumen der zu behandelnden Struktur so durchgeführt werden, dass sie zu dem Ausbilden des Polymerleiters über die Gesamtheit der ausgebildeten Oberfläche der Strukturen ohne Beeinträchtigen ihrer inneren Porosität führen.

3. Verfahren nach Anspruch 1 oder 2, **dadurch gekennzeichnet, dass** das leitende Polymer der anfänglichen Ablagerung ein Polypyrrol ist.

4. Verfahren nach den Ansprüchen 1 und 3, **dadurch gekennzeichnet, dass** das Lack- oder Glasurleitermittel auf der Grundlage von Pulvern, Fasern oder linsenförmigen Teilchen vorliegt.

5. Verfahren nach den Ansprüchen 1 und 4, **dadurch gekennzeichnet, dass** das Ablagern der schützenden Lack- oder Glasurschicht durch Aufstreichen, Beschichten durch Eintauchen oder durch Pulverauftrag erfolgt.

6. Komplexe poröse Strukturen nach Art eines vernetzten, verfilzten oder gewebten schaumartigen Materiales, **dadurch gekennzeichnet, dass** ihre über die Gesamtheit ihrer Oberfläche vorhandene, durch Elektrolyse von Blei oder Bleilegierungen hergestellte Metallisierung durch eine vorangehende spezifische Behandlung zur Aktivierung der Leitfähigkeit durch zwei aufeinanderfolgende Beschichtungsphasen der ausgebildeten Oberfläche der Strukturen ermöglicht ist, die aus einer ersten Ablagerung eines Polymerleiters, der die für die Strukturen gewünschte Leitfähigkeit bereitstellt, und aus einer zweiten Ablagerung von einem leitfähigen Lack oder einer leitfähigen Glasur besteht, der beziehungsweise die mit Kohlenstoff oder Grafit versehen und ausreichend dünn ist, um den Oberflächenschutz des Polymerleiters ohne Beeinträchtigen der den Strukturen verliehenen elektrischen Leitfähigkeit sicherzustellen, gegen die Wirkung der Deaktivierung der Leitfähigkeitseigenschaft durch die letztere aufgrund der kathodischen Polarisation der Strukturen innerhalb des elektrolytischen Bleibades besteht.

7. Komplexe poröse Strukturen nach Art eines vernetzten, verfilzten oder gewebten schaumartigen Materiales nach Anspruch 6, **dadurch gekennzeichnet, dass** das zuerst an der Oberfläche des Substrates gebildete leitende Polymer ein Polypyrrol ist.

8. Komplexe poröse Strukturen nach Art eines vernetzten, verfilzten oder gewebten schaumartigen Materiales nach Anspruch 6, **dadurch gekennzeichnet, dass** das leitfähige Überzugsmittel zum Schutz des Polymerleiters in der Gestalt von Pulvern, Fasern oder linsenartigen Teilchen vorliegt.

9. Komplexe poröse Strukturen nach Art eines vernetzten, verfilzten oder gewebten schaumartigen Materiales nach Anspruch 6 und 8, **dadurch gekennzeichnet, dass** die Ablagerung des leitenden Schutzlackes zwischen 0,3 und 2 g/m² der ausgebildeten Oberfläche liegt.

## Claims

1. Method for the treatment of complex porous structures of the reticulated foam, felt or fabric types, intended to make them electrically conductive with a view to carrying out, over their entire developed surface, an electrochemical deposition of lead or lead alloy, **characterised in that** it is performed in two consecutive coating phases, i.e.
a) a treatment to form a conductive polymer, providing the desired continuous electrical conductivity,
b) a treatment for the surface protection of the layer of conductive polymer by a thin covering deposit of a conductive varnish or lacquer, which is sufficiently thin to ensure the surface protection of the conductive polymer without reducing the electrical conductivity provided to the structures in step a), the varnish or lacquer being formed of at least a plasticizer, a solvent and an electrically conductive agent formed of carbon or graphite,
these two deposits being themselves performed through the thickness of the structures, on the surface of their fibres or meshes, without clogging their porosity.

2. Method according to claim 1, **characterised in that** the initial deposit of conductive polymer is obtained at the end of a treatment which itself comprises the following steps:
a) oxidising pre-treatment of the base structure,
b) rinsing, optionally supplemented by draining and drying,
c) deposition of a monomer,
d) draining,
e) polymerisation of the monomer, by oxidation-doping, into an electrically conductive polymer,
f) rinsing and draining,
g) optional drying, these various steps being performed one after another through the volume of the structure to be treated, and in such a way as to lead to the formation of the conductive polymer on the entire developed surface of the structures, without clogging their internal porosity.

3. Method according to either of claims 1 or 2, **characterised in that** the conductive polymer of the initial deposit is polypyrrole.

4. Method according to claims 1 and 3, **characterised in that** the conductive agent of the protective varnish or lacquer is present as powders, filaments or lenticular forms.

5. Method according to claims 1 and 4, **characterised in that** the deposition of the layer of protective varnish or lacquer is performed by brushing, immersion or spraying.

6. Complex porous structures of the reticulated foam, felt or fabric types, **characterised in that** their metallisation, over their entire developed surface, by electrolysis of lead or lead alloys, is made possible by a specific preliminary conductive activation treatment obtained by means of two consecutive phases of coating the developed surface of the structures, consisting of a first deposit of a conductive polymer, which provides the structures with the required conductivity, and a second thin deposit of conductive lacquer or varnish containing graphite or carbon, which is sufficiently thin to ensure the surface protection of the conductive polymer without reducing the electrical conductivity provided to the structures, against the deactivating effect of the conductive nature of the latter, due to the cathodic polarisation of the said structures in the electrolytic lead-coating bath.

7. Complex porous structures of the reticulated foam, felt or fabric types according to claim 6, **characterised in that** the conductive polymer formed on the surface of the initial substrate is polypyrrole.

8. Complex porous structures of the reticulated foam, felt or fabric types according to claim 6, **characterised in that** the conductive agent of the protective varnish for the conductive polymer is carbon or graphite, present as powders, filaments or lenticular forms.

9. Complex porous structures of the reticulated foam, felt or fabric types according to claims 6 and 8, **characterised in that** the deposition of protective conductive lacquer is between 0.3 and 2 g/m² of developed surface area inclusive.
